# EUROPEAN PATENT SPECIFICATION

(11) **EP 3 817 187 B1**
(45) Date of publication and mention of the grant of the patent: **17.08.2022**
(21) Application number: 20166941.3
(22) Date of filing: 31.03.2020
(51) Int. Cl.: H02J 50/20, H02J 50/40, H02J 50/60

(54) **TRANSMITTER AND METHOD FOR WIRELESS CHARGING, AND TERMINAL**
SENDER UND VERFAHREN ZUM DRAHTLOSEN LADEN SOWIE ENDGERÄT
ÉMETTEUR ET PROCÉDÉ DE CHARGEMENT SANS FIL ET TERMINAL

(30) Priority: 04.11.2019 CN 201911067279
(43) Date of publication of application: 05.05.2021
(73) Proprietor: Beijing Xiaomi Mobile Software Co., Ltd., Beijing 100085 (CN)
(72) Inventor: PAN, Yajun, Haidian District, Beijing 100085 (CN); WEI, Shujun, Haidian District, Beijing 100085 (CN); BAI, Jian, Haidian District, Beijing 100085 (CN)
(74) Representative: Gevers Patents

(56) References cited:
- US-A1- 2017 117 752
- US-A1- 2018 069 405
- US-B1- 10 135 294

## Description

### TECHNICAL FIELD

The present disclosure generally relates to the technical field of wireless charging, and more particularly, to a transmitter for wireless charging, a terminal and a method for wireless charging.

### BACKGROUND

Wireless charging solutions generally include an electromagnetic-induction-based Wireless Power Consortium (WPC) standard and a magnetic resonance technologybased AirFuel Alliance (AFA) standard (which is established by the AirFuel alliance). Both a WPC solution and an AFA solution are technologies applied to short-distance wireless charging of a transmission device and a receiving device within about 5mm. Along with extension of Internet of everything scenarios, long-distance wireless charging solutions have become more and more important.

US 2017/117752 A1 discusses related technology, according to the preamble of claim 1.

### SUMMARY

The present disclosure provides a transmitter for wireless charging, a terminal and a method for wireless charging.

According to a first aspect of embodiments of the present disclosure, a transmitter for wireless charging is provided, as described in any one of claims 1-5.

According to a second aspect of the embodiments of the present disclosure, a method for wireless charging is provided, as described in any one of claims 6-10.

The technical solutions provided by embodiments of the present disclosure may have beneficial effects.

The transmitter for wireless charging may convert the first alternating-current electric signal of a low frequency into the second alternating-current electric signal of a high frequency through the first conversion circuit and convert the second alternating-current electric signal into the radio frequency signal through the first radio frequency antenna for radiation to a space around. That is, since the transmitter for wireless charging transmits the radio frequency signal, long-distance wireless signal transmission may be implemented under an obstructed condition based on characteristic that the radio frequency signal is high in frequency and may penetrate an obstruction such as a nonmetallic object. Therefore, a terminal may receive a radio frequency signal under an obstructed condition and implement long-distance wireless charging based on the radio frequency signal to meet a requirement of a user on long-distance wireless charging.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a typical application scenario of an infrared long-distance wireless charging solution.
FIG. 2 is a schematic diagram illustrating a mobile phone receiving an infrared signal based on an infrared long-distance wireless charging solution.
FIG. 3 is a structure diagram of a transmitter for wireless charging according to an exemplary embodiment.
FIG. 4 is a structure diagram of a transmitter for wireless charging according to an exemplary embodiment.
FIG. 5 is a structure diagram of a transmitter for wireless charging according to an exemplary embodiment.
FIG. 6 is a structure diagram of a transmitter for wireless charging according to an exemplary embodiment.
FIG. 7 is a structure diagram of a transmitter for wireless charging according to an embodiment of the present disclosure.
FIG. 8 is a structure diagram of a terminal according to an exemplary embodiment.
FIG. 9 is a structure diagram of a terminal according to an exemplary embodiment.
FIG. 10 is a structure diagram of a terminal according to an embodiment of the present disclosure.
FIG. 11 is a structure diagram of another terminal according to an embodiment of the present disclosure.
FIG. 12 is a flowchart showing a method for wireless charging according to an exemplary embodiment.
FIG. 13 is a flowchart showing a method for wireless charging according to an exemplary embodiment.
FIG. 14 is a block diagram of a device for wireless charging according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Wireless charging solutions are mostly AFA/WPC-standard-based short-distance wireless charging. For long-distance wireless charging, some companies have proposed infrared long-distance wireless charging solutions. Based on a characteristic that an infrared signal may be transmitted wirelessly, a solution of converting an infrared ray into electric energy to charge a mobile phone has been proposed.

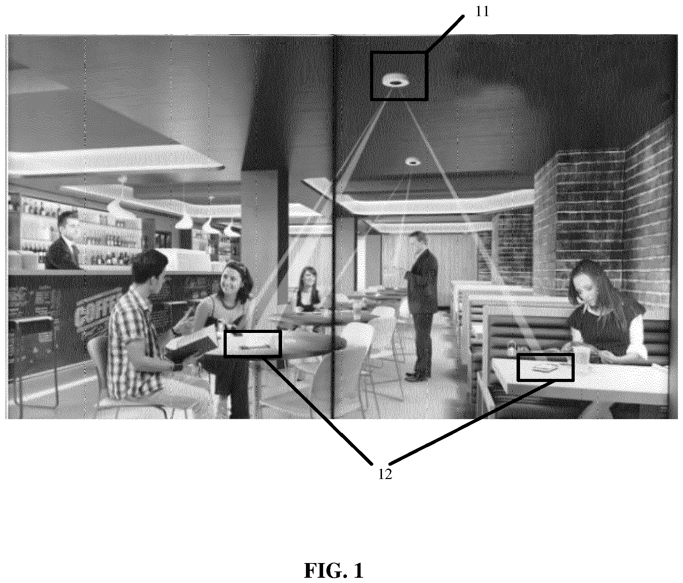

As an example, FIG. 1 is a typical application scenario of an infrared long-distance wireless charging solution. As shown in FIG. 1, white round devices 11 mounted at a top of a room in FIG. 1 are transmission devices for infrared long-distance wireless charging. Devices 12 placed on square tables and round tables may all be mobile phones. The transmission devices for infrared long-distance wireless charging may transmit infrared signals to implement long-distance wireless charging of the mobile phones placed on multiple tables. However, due to a characteristic that an infrared ray may not penetrate an obstruction for transmission, the infrared long-distance wireless charging solution may only be applied to long-distance wireless charging in unobstructed and non-touch scenarios, and a user experience is greatly degraded.

In addition, the mobile phone may receive the infrared signal and can be charged only when the infrared signal is converted into electric energy. However, considering the characteristic that an infrared ray may not penetrate an obstruction for transmission, an infrared receiver is required to be arranged at a certain position on a screen of the mobile phone to implement reception of the infrared signal by the mobile phone, which may destroy the design of a full-screen display and influence a screen-to-body ratio of the mobile phone.

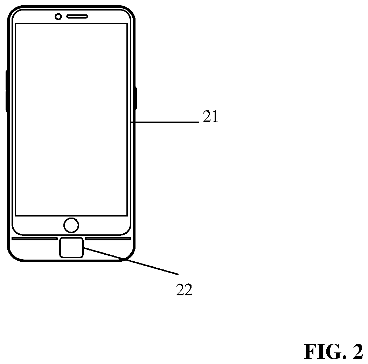

As an example, FIG. 2 is a schematic diagram illustrating a mobile phone receiving an infrared signal based on an infrared long-distance wireless charging solution. As shown in FIG. 2, a device 21 in FIG. 2 is a mobile phone, and an infrared receiver 22 is arranged over an extended fitting of the mobile phone. For receiving an infrared signal from a transmission device for infrared long-distance wireless charging, the infrared receiver 22 is required to be arranged over the extended fitting of the mobile phone, and then a screen of the mobile phone may not be designed into a full-screen display. Since the infrared receiver 22 is arranged on the screen of the mobile phone, the appearance of the mobile phone may be not so attractive, and a user experience is degraded.

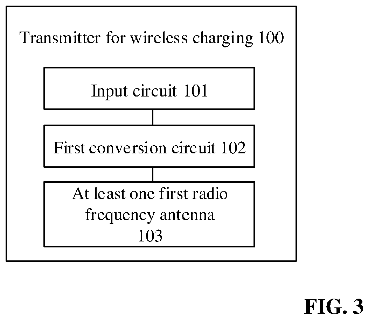

For enabling a user to implement long-distance wireless charging under an obstructed condition, an embodiment of the present disclosure provides a transmitter for wireless charging. FIG. 3 is a structure diagram of a transmitter for wireless charging according to an exemplary embodiment. As shown in FIG. 3, the transmitter for wireless charging 100 includes an input circuit 101, a first conversion circuit 102 and at least one first radio frequency antenna 103.

The input circuit 101 is configured to receive a first alternating-current electric signal of a first frequency.

The first conversion circuit 102 is configured to convert the first alternating-current electric signal into a second alternating-current electric signal of a second frequency.

The at least one first radio frequency antenna 103 may be connected with the first conversion circuit, and may be configured to convert the second alternating-current electric signal into a radio frequency signal for wireless charging and transmit the radio frequency signal.

During a practical application, the transmitter for wireless charging 100, after accessing an alternating current network, may convert the received alternating-current electric signal into the radio frequency signal for transmission, and then a wireless charging receiver (a wireless charging receiver in a mobile phone), after receiving the radio frequency signal, may convert the radio frequency signal into electric energy capable of charging the mobile phone.

The radio frequency signal may be a high-frequency alternating current electromagnetic wave which has a frequency range from 300kHz to 300GHz. Here, an electromagnetic wave with a frequency higher than 100khz may be propagated in the air and reflected through an ionized layer on an outer edge of the atmosphere, and has a long-distance transmission capability.

A high-frequency electromagnetic wave may also have a capability of penetrating a nonmetallic object due to a high frequency and a small wavelength. Therefore, long-distance wireless charging may be implemented under an obstructed condition. In the embodiment of the present disclosure, the radio frequency signal may be transmitted through the radio frequency antenna to implement obstructed long-distance wireless charging of the mobile phone.

The input circuit 101 may be configured to receive the first alternating-current electric signal of the first frequency from the alternating current network. The electric signal output by the alternating current network may be an alternating current, and the frequency thereof is usually low. For example, in China, the alternating current network may output a 50Hz sinusoidal alternating current. Therefore, the first frequency may be 50Hz. The first frequency output by the alternating current network in a different region may also be another value, for example, 60Hz. A magnitude of the first frequency of the first alternating-current electric signal is not limited in the present disclosure.

The input circuit 101, after receiving the first alternating-current electric signal of the first frequency, may output the first alternating-current electric signal to the first conversion circuit 102. The first conversion circuit 102 may be configured to acquire a high-frequency electric signal, namely converting the first alternating-current electric signal of the first frequency into the second alternating-current electric signal of the second frequency, the second frequency being higher than the first frequency. For example, the second frequency may be a frequency higher than 300khz.

In such a manner, conversion of the first low-frequency alternating-current electric signal transmitted by the alternating current network into the second high-frequency alternating-current electric signal may be implemented through the input circuit 101 and the first conversion circuit 102.

The first radio frequency antenna 103 may be a directional antenna with directionality or an omnidirectional antenna without directionality. However, for the transmitter for wireless charging in the embodiment of the present disclosure, for charging mobile phones of multiple users in multiple directions, the first radio frequency antenna 103 may be an omnidirectional antenna.

The first radio frequency antenna 103 may be connected with the first conversion circuit 102, and after receiving the second alternating-current electric signal of the second frequency from the first conversion circuit 102, may convert the second alternating-current electric signal into the radio frequency signal for wireless charging and transmit the radio frequency signal. The radio frequency signal for wireless charging may be a high-frequency electromagnetic wave. During the practical application, the first radio frequency antenna 103 may convert the second high-frequency alternating-current electric signal into the high-frequency electromagnetic wave for radiation to a space around.

In the embodiment, the transmitter for wireless charging may convert the first low-frequency alternating-current electric signal into the second high-frequency alternating-current electric signal through the first conversion circuit 102 and convert the second alternating-current electric signal into the radio frequency for radiation to the space around through the first radio frequency antenna 103. Long-distance wireless signal transmission may be implemented under an obstructed condition based on a characteristic that the radio frequency signal is high in frequency. Therefore, a basis is provided for long-distance wireless charging of the mobile phone under the obstructed condition.

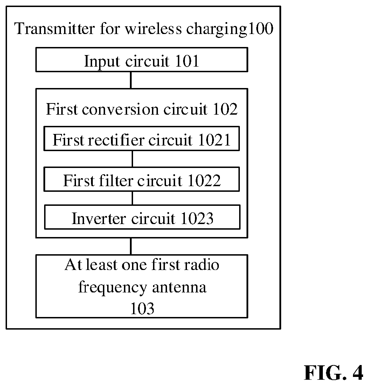

FIG. 4 is a structure diagram of a transmitter for wireless charging according to an exemplary embodiment. As shown in FIG. 4, the first conversion circuit 102 includes:

a first rectifier circuit 1021, configured to convert the first alternating-current electric signal into a first direct-current electric signal;
a first filter circuit 1022, configured to perform smoothing processing on the first direct-current electric signal to obtain a second direct-current electric signal; and
an inverter circuit 1023, configured to perform frequency modulation on the second direct-current electric signal to convert the second direct-current electric signal into the second alternating-current electric signal of the second frequency.

In the embodiment, for providing a stable direct-current electric signal for another circuit (for example, a control circuit) in the transmitter for wireless charging 100, the first alternating-current electric signal, transmitted by the alternating current network, of the first frequency may be rectified and filtered through the first rectifier circuit 1021 and the first filter circuit 1022 to obtain the second direct-current electric signal. The second direct-current electric signal may be a flat-waveform direct-current electric signal.

After the flat-waveform direct-current electric signal is obtained, frequency modulation may be performed on the flat-waveform direct-current electric signal through the inverter circuit 1023 to convert the flat-waveform direct-current electric signal into the second high-frequency alternating-current electric signal. Frequency modulation refers to controlling a frequency of a carrier through a modulation signal. The second low-frequency direct-current electric signal may be converted into the second high-frequency alternating-current electric signal by frequency modulation. Therefore, the inverter circuit 1023 may be configured to convert a low-frequency direct current signal into a high-frequency alternating current signal.

In the embodiment, the stable direct-current electric signal may be provided for the transmitter for wireless charging through the first rectifier circuit 1021 and the first filter circuit 1022 for another circuit such as a control circuit to use. Based on this, the high-frequency alternating-current electric signal may be obtained through the inverter circuit 1023. Therefore, the first rectifier circuit 1021, the first filter circuit 1022 and the inverter circuit 1023 may be matched to generate the high-frequency alternating-current electric signal capable of implementing long-distance signal transmission under the obstructed condition on the basis of ensuring basic work of the transmitter for wireless charging.

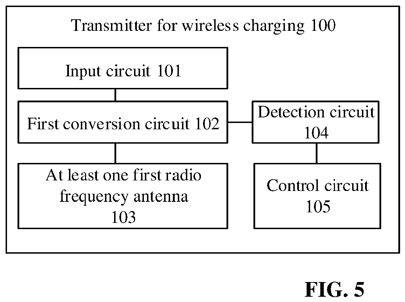

FIG. 5 is a structure diagram of a transmitter for wireless charging according to an exemplary embodiment. As shown in FIG. 5, the transmitter for wireless charging 100 may further include:
a detection circuit 104, configured to detect whether there is a living body entering a preset range of the transmitter for wireless charging or not and form a detection signal; and
a control circuit 105, connected with the detection circuit 104 and configured to, when the detection signal indicates that there is a living body entering the preset range, reduce transmission power of the radio frequency signal.

As shown in FIG. 5, the transmitter for wireless charging 100 may include the input circuit 101, the first conversion circuit 102, the at least one first radio frequency antenna 103, the detection circuit 104 and the control circuit 105.

The detection circuit 104 and the control circuit 105 may be matched to realize a biological detection function. Biological detection refers to detecting whether there is a living body entering a radiation range of the transmitter for wireless charging 100 or not. Here, since the frequency of the radio frequency signal is high and radiation exists and hazards a living body to a certain extent, whether there is a living body entering the preset range of the transmitter for wireless charging 100 or not may be detected through the detection circuit 104.

The detection circuit 104 may be an infrared detection circuit including an infrared detector and may detect an intensity of an infrared ray emitted by a living body through the infrared detector to judge whether there is a living body entering the radiation range of the transmitter for wireless charging 100 or not.

When it is detected that there is a living body entering the radiation range of the transmitter for wireless charging 100, a detection signal may be generated. For example, when it is detected that there is a living body entering, a high-level detection signal may be output, and when there is no living body entering, a low-level detection signal may be output.

The detection circuit 104 may be connected with the control circuit 105, and the detection circuit 104 may transmit the detection signal obtained by real-time detection to the control circuit 105. Therefore, the control circuit 105 may judge whether there is a living body entering the preset range of the transmitter for wireless charging 100 or not according to different detection signals that are received, and when it is determined that there is a living body entering the preset range, may reduce the transmission power of the radio frequency signal transmitted by the transmitter for wireless charging 100. The preset range may be determined according to a radiation range corresponding to present transmission power of the transmitter for wireless charging 100. When the present transmission power of the transmitter for wireless charging 100 is higher, the preset range is larger.

The living body may be a person or an animal, etc.

Reducing the transmission power of the radio frequency signal transmitted by the transmitter for wireless charging 100 specifically refers to reducing the transmission power to meet a safety standard for radiation to a human body. For example, when a safety distance is 2.5m, the transmission power of the transmitter for wireless charging 100 may be reduced to a range defined by a circle centered on the transmitter for wireless charging 100 and having a radius obtained by subtracting 2.5m from d. The transmission power of the transmitter for wireless charging 100 may be regulated through the safety distance to meet the radiation range.

In an embodiment, the detection circuit 104 may determine whether there is a living body entering the radiation range of the transmitter for wireless charging 100 or not, and may be further matched with the control circuit 105 to reduce influence of radiation of the transmitter for wireless charging 100 during work to a living body. Therefore, a certain guarantee can be provided for health of the living body on the basis of implementing long-distance signal transmission under the obstructed condition.

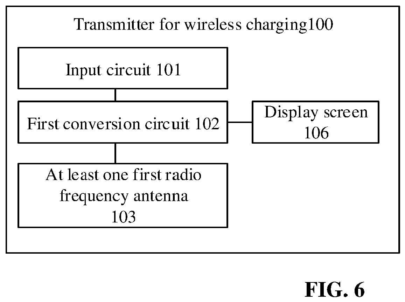

FIG. 6 is a structure diagram of a transmitter for wireless charging according to an exemplary embodiment. As shown in FIG. 6, the transmitter for wireless charging 100 may further include:
a display screen 106, configured to display a charging parameter for wireless charging, the charging parameter including at least one of:
the second frequency;
a charging current;
a charging voltage; and
charging power.

As shown in FIG. 6, the transmitter for wireless charging 100 may include the input circuit 101, the first conversion circuit 102, the at least one first radio frequency antenna 103 and the display screen 106.

On the display screen 106, the abovementioned contents may be displayed, and charging efficiency, a charging duration and the like may also be displayed.

In the embodiment, each parameter in a charging process may be displayed through the display screen 106. Therefore, a user may directly know about each parameter in the charging process to regulate and control each parameter in the wireless charging process according to the displayed charging parameter, and the user experience is further improved.

It is to be noted that the transmitter for wireless charging may further include a power circuit, and the power circuit is configured to provide working power for the transmitter for wireless charging.

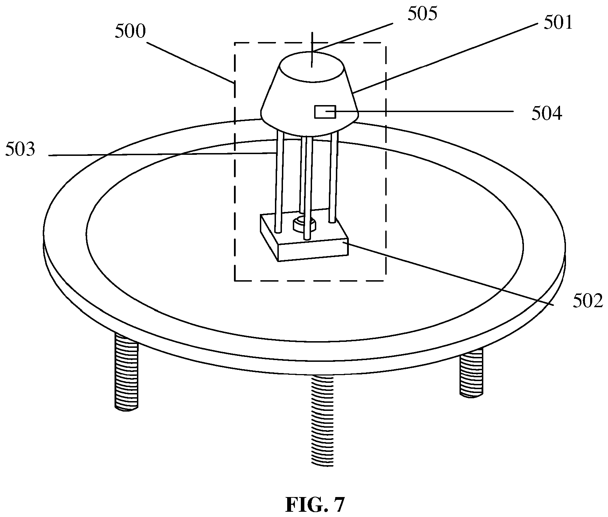

FIG. 7 is a structure diagram of a transmitter for wireless charging according to an embodiment of the present disclosure. As shown in FIG. 7, the transmitter for wireless charging may be designed to have a desk-lamp like shape, and the transmitter for wireless charging of the desk-lamp like shape may be placed on an indoor office table to charge mobile phones supporting long-distance wireless radio frequency charging around.

It is to be noted that the transmitter for wireless charging may also be designed into other shapes, for example, a column and a tower. The shape of the transmitter for wireless charging is not limited in the embodiments of the present disclosure.

As shown in FIG. 7, the transmitter for wireless charging 500 includes:
a carrier 501, the display screen 504 and the at least one first radio frequency antenna 505 being placed on an outer surface of the carrier 501;
a base 502, provided with an accommodation cavity, the input circuit and the first conversion circuit being arranged in the accommodation cavity; and
support rods 503, one end of each support rod 503 being connected with the base 502 and the other end being connected with the carrier 501, to support the carrier 501.

In the embodiment of the present disclosure, the carrier 501 may be umbrella-shaped, and the at least one first radio frequency antenna 505 is arranged at a top end of the umbrella-shaped carrier 501. Here, the carrier 501 may also be of other shapes, for example, a cone and a square. The shape of the carrier 501 is also not limited in the embodiments of the present disclosure.

In the transmitter for wireless charging of a desk-lamp like shape in FIG. 7, both the input circuit and the first conversion circuit are arranged in the accommodation cavity of the base 502.

Other circuits such as a power circuit and a control circuit, other than components such as the display screen 504 and the at least one first radio frequency antenna 505, may also be arranged in the accommodation cavity of the base 502.

In the embodiment, the transmitter for wireless charging 500 is designed to include the carrier 501, the base 502 and the support rods 503, the support rods 503 are placed on the base 502, and the carrier 501 is supported by the support rods 503. Therefore, a radiation height of the at least one first radio frequency antenna 505 on the carrier 501 is greater, and the radiation range is larger; and the display screen 504 on the carrier 501 may also be at a position opposite to eyes of a human body, which is more favorable for viewing data displayed on the display screen 504 with eyes. Therefore, the wireless charging solution may be optimized, and meanwhile, convenience is brought to the user.

It is to be noted that the transmitter for wireless charging 500 may further include a light emitting component, arranged in the umbrella-shaped carrier 501 and configured to emit light.

In an example, the light emitting component may be a Light Emitting Diode (LED) lamp. The types of the light emitting component are not limited in the embodiment of the present disclosure.

In such case, since the transmitter for wireless charging is designed to have a desk-lamp like shape and is placed on a desk, a basic function of a desk lamp may be realized based on the light emitting component on the basis of providing the radio frequency signal for wireless charging by the transmitter for wireless charging, and the mobile phone may be charged through the transmitter for wireless charging during study and work.

An embodiment also provides a terminal. The terminal may receive a radio frequency signal and convert the radio frequency signal into a direct-current electric signal for charging to implement charging. Reception of the radio frequency signal may be implemented directly through an antenna, and a wireless charging receiver is not required to be arranged on a screen, so that the terminal may implement long-distance wireless charging under an obstructed condition on the basis of no influence on a screen-to-body ratio of the screen.

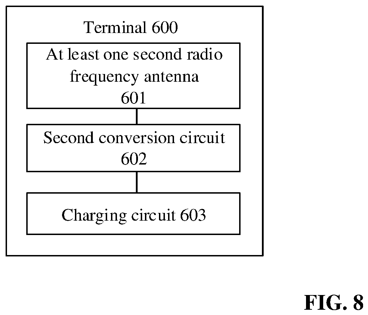

FIG. 8 is a structure diagram of a terminal according to an exemplary embodiment. As shown in FIG. 8, the terminal 600 includes:
at least one second radio frequency antenna 601, configured to receive a radio frequency signal for wireless charging;
a second conversion circuit 602, connected with the at least one second radio frequency antenna 601 and configured to convert the radio frequency signal into a third direct-current electric signal of a third frequency; and
a charging circuit 603, configured to charge the terminal 600 based on the third direct-current electric signal.

In the embodiment, the terminal may be an electronic device such as a mobile phone, a scanner and a printer. A type of the terminal is not limited in the embodiments.

The at least one second radio frequency antenna 601 may be presented in form of an antenna array. A size and direction of a radiation field may be changed in form of the antenna array. The radiation field is a range of electromagnetic radiation generated by the radio frequency signal generated by the transmitter for wireless charging in the abovementioned embodiments.

Since the antenna array is formed by arranging two or more than two single antennae working at the same frequency according to a certain requirement, unlike a single antenna that is limited in transmission direction, the antenna array formed by arranging multiple single antennae may change the size and direction of the radiation field to further maximally receive the radio frequency signal.

The radio frequency signal received by the at least one second radio frequency antenna 601 may be the radio frequency signal transmitted by the transmitter for wireless charging in the abovementioned embodiments. After the radio frequency signal is received, the radio frequency signal may be transmitted to the second conversion circuit 602. The radio frequency signal may be converted into the third direct-current electric signal of the third frequency through the second conversion circuit 602.

The third direct-current electric signal of the third frequency may be configured to charge the terminal, and may be a frequency-fixed direct current signal. For example, for a power grid in China, the third direct-current electric signal, charging the terminal, of the third frequency may be a 50HZ direct-current electric signal, which is a low-frequency direct-current electric signal.

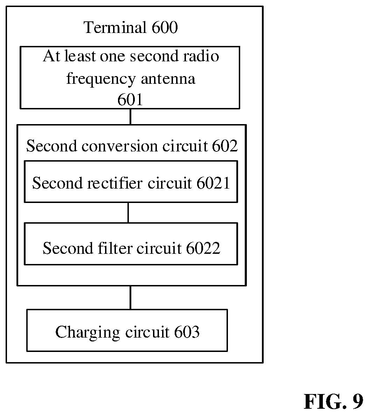

FIG. 9 is a structure diagram of a terminal according to an exemplary embodiment. As shown in FIG. 9, the second conversion circuit 602 includes:
a second rectifier circuit 6021, configured to convert the radio frequency signal into a fourth direct-current electric signal; and
a second filter circuit 6022, configured to perform smoothing processing on the fourth direct-current electric signal to obtain the third direct-current electric signal of the third frequency.

In the embodiment of the present disclosure, since the radio frequency signal is a high-frequency alternating-current electric signal, the second rectifier circuit 6021 and the second filter circuit 6022 are introduced for implementing conversion of the high-frequency radio frequency signal into the third low-frequency direct-current electric signal. The radio frequency signal may be converted into a direct-current electric signal, i.e., the fourth direct-current electric signal, through the second rectifier circuit 6021, and then smoothing processing may be performed on the fourth direct-current electric signal through the second filter circuit 6022 to obtain a flat-waveform direct-current electric signal or a voltage-stable direct-current electric signal, i.e., the third direct-current electric signal of the third frequency. Therefore, the terminal 600 may be charged based on the third voltage-stable direct-current electric signal of the third frequency, and damage to a battery of the terminal 600 may be reduced.

In the embodiment, the radio frequency signal may be received through the at least one second radio frequency antenna 601, and the high-frequency alternating current radio frequency signal may be further converted into the third low-frequency direct-current electric signal through the second conversion circuit 602 to charge the terminal based on the third direct-current electric signal. The terminal 600 may receive the radio frequency signal at a position relatively far from the transmitter for wireless charging based on a characteristic that the radio frequency signal is high in frequency and may penetrate a nonmetallic object to implement radio frequency signal-based long-distance wireless charging, and convenience may be brought to a user.

Specific implementation of the terminal will be described below.

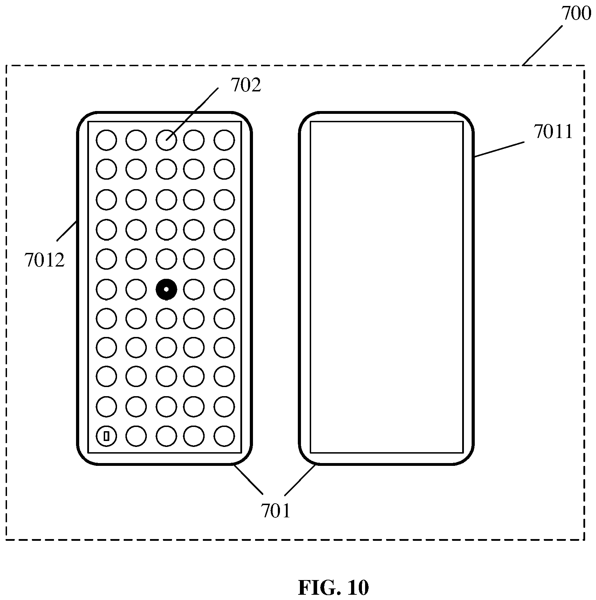

FIG. 10 is a structure diagram of a terminal according to an embodiment of the present disclosure. As shown in FIG. 10, the terminal may implement long-distance wireless charging under an obstructed condition on the basis of no influence on a screen-to-body ratio of a screen.

The terminal 700 may further include:
a first housing 701, including a first outer surface 7012 and a first inner surface 7011; and
the at least one second radio frequency antenna 702, arranged on the first outer surface 7012.

In an example, the terminal 700 may be a mobile phone. For avoiding influence on the screen-to-body ratio of the screen of the mobile phone, the at least one second radio frequency antenna 702 may be arranged on the first outer surface 7012 of the first housing 701 of the mobile phone.

The at least one second radio frequency antenna 702 may be arranged in form of an antenna array. Therefore, the size and direction of the radiation field may be changed in form of the antenna array to maximally receive the radio frequency signal.

It is to be noted that the radio frequency signal may penetrate objects made from most of materials but a metallic object may affect reception of the radio frequency signal due to existence of electrostatic screening of the metallic object. Based on this, considering a material of the first housing 701, the at least one second radio frequency antenna 702 may be directly arranged on the first outer surface 7012 of the first housing 701. Therefore, the first housing 701 of the terminal may be made from any material without influence on reception of the radio frequency signal.

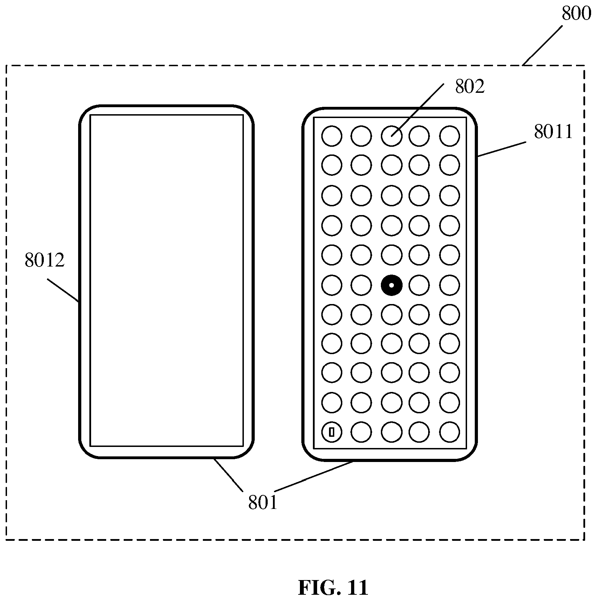

FIG. 11 is a structure diagram of another terminal according to an embodiment of the present disclosure. The terminal 800 includes:
a second housing 801, including a second outer surface 8012 and a second inner surface 8011, the second housing 801 being made from a nonmetallic material; and
the at least one second radio frequency antenna 802, arranged on the second inner surface 8011.

In an example, considering influence of a metallic shell on the radio frequency signal, the second housing 801 of the terminal may be made from the nonmetallic material that may not affect transmission and reception of the radio frequency signal. The nonmetallic material may be plastics, a composite material and the like. When the second housing 801 of the terminal is made from the nonmetallic material, the at least one second radio frequency antenna 802 may also be arranged on the second inner surface 8011 of the second housing 801.

In an example, the at least one second radio frequency antenna may be arranged on an outer surface of a housing of the terminal (or on an inner surface of the housing when the housing is made from a nonmetallic material) to receive the radio frequency signal, the high-frequency alternating current radio frequency signal may be converted into the third low-frequency direct-current electric signal through the second conversion circuit on the basis of no influence on the screen-to-body ratio of the screen of the terminal, and the terminal may further be charged based on the third direct-current electric signal. Therefore, the terminal may receive the radio frequency signal at a position relatively far from the transmitter for wireless charging based on the characteristic that the radio frequency signal is high in frequency and may penetrate a nonmetallic object to implement radio frequency signal-based long-distance wireless charging, and convenience may be brought to the user.

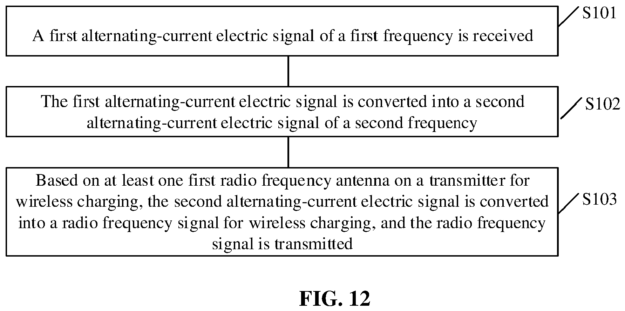

FIG. 12 is a flowchart showing a method for wireless charging according to an exemplary embodiment. The charging method is applied to a transmitter for wireless charging. As shown in FIG. 12, the method for wireless charging includes the following steps.

In S101, a first alternating-current electric signal of a first frequency is received.

In S102, the first alternating-current electric signal is converted into a second alternating-current electric signal of a second frequency.

In S103, based on at least one first radio frequency antenna on the transmitter for wireless charging, the second alternating-current electric signal is converted into a radio frequency signal for wireless charging, and the radio frequency signal is transmitted.

In the embodiment, the method for wireless charging may be applied to the transmitter for wireless charging. The transmitter for wireless charging may include an input circuit, a first conversion circuit and the at least one first radio frequency antenna. The operation in S101 that the first alternating-current electric signal of the first frequency is received may be specifically implemented by the input circuit. The operation in S 102 that the first alternating-current electric signal is converted into the second alternating-current electric signal of the second frequency may be specifically implemented by the first conversion circuit.

Therefore, the method for wireless charging applied to the transmitter for wireless charging may include:
receiving the first alternating-current electric signal of the first frequency through the input circuit;
converting the first alternating-current electric signal into the second alternating-current electric signal of the second frequency through the first conversion circuit; and
based on the at least one first radio frequency antenna on the transmitter for wireless charging, converting the second alternating-current electric signal into the radio frequency signal for wireless charging, and transmitting the radio frequency signal.

The operation in S102 that the first alternating-current electric signal is converted into the second alternating-current electric signal of the second frequency may include that:
the first alternating-current electric signal is converted into a first direct-current electric signal;
smoothing processing is performed on the first direct-current electric signal to obtain a second direct-current electric signal; and
frequency modulation is performed on the second direct-current electric signal to convert it into the second alternating-current electric signal of the second frequency.

The first low-frequency alternating-current electric signal may be converted into the second high-frequency alternating-current electric signal, and the second alternating-current electric signal may be converted into the radio frequency for radiation to a space around through the first radio frequency antenna on the transmitter for wireless charging. Long-distance wireless signal transmission may be implemented under an obstructed condition based on a characteristic that the radio frequency signal is high in frequency and may penetrate a nonmetallic object. Therefore, a basis is provided for long-distance wireless charging under an obstructed condition.

The first conversion circuit in the transmitter for wireless charging may include a first rectifier circuit, a first filter circuit and an inverter circuit. The operation that the first alternating-current electric signal is converted into the first direct-current electric signal may be specifically implemented by the first rectifier circuit. The operation that smoothing processing is performed on the first direct-current electric signal to obtain the second direct-current electric signal may be specifically implemented by the first filter circuit. The operation that frequency modulation is performed on the second direct-current electric signal to convert it into the second alternating-current electric signal of the second frequency may be specifically implemented by the inverter circuit.

Therefore, the operation in S102 that the first alternating-current electric signal is converted into the second alternating-current electric signal of the second frequency may include that:
the first alternating-current electric signal is converted into the first direct-current electric signal through the first rectifier circuit;
smoothing processing is performed on the first direct-current electric signal to obtain the second direct-current electric signal through the first filter circuit; and
frequency modulation is performed on the second direct-current electric signal to convert it into the second alternating-current electric signal of the second frequency through the inverter circuit.

The method may further include that: whether there is a living body entering a preset range of the transmitter for wireless charging or not is detected, and a detection signal is formed; and when the detection signal indicates that there is a living body entering the preset range, transmission power of the radio frequency signal is reduced.

The transmitter for wireless charging may further include a detection circuit and a control circuit. The operation that whether there is a living body entering the preset range of the transmitter for wireless charging or not is detected and the detection signal is formed may be specifically implemented by the detection circuit. The operation that the transmission power of the radio frequency signal is reduced when the detection signal indicates that there is a living body entering the preset range may be specifically implemented by the control circuit.

Therefore, the method may further include:
through the detection circuit, whether there is a living body entering the preset range of the transmitter for wireless charging or not is detected and a detection signal is formed; and
when the detection signal indicates that there is a living body entering the preset range, the transmission power of the radio frequency signal is reduced through the control circuit.

In the embodiment, whether there is a living body entering the radiation range of the transmitter for wireless charging or not may be determined to reduce influence of radiation of the transmitter for wireless charging during work to a living body. Therefore, a certain guarantee can be provided for health of the living body on the basis of implementing long-distance signal transmission under the obstructed condition.

The method may further include that: a charging parameter for wireless charging is displayed through a display screen on the transmitter for wireless charging, the charging parameter including at least one of:
the second frequency;
a charging current;
a charging voltage; and
charging power.

In the embodiment, each parameter in a charging process may be displayed, so that a user may directly know about each parameter in the charging process, and a user experience is further improved.

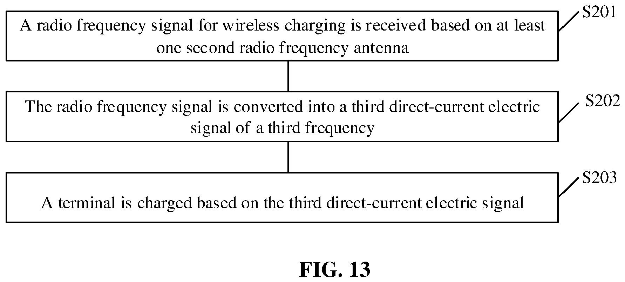

FIG. 13 is a flowchart showing a method for wireless charging according to an exemplary embodiment. The method is applied to a terminal. As shown in FIG. 13, the method for wireless charging includes the following steps.

In S201, a radio frequency signal for wireless charging is received based on at least one second radio frequency antenna.

In S202, the radio frequency signal is converted into a third direct-current electric signal of a third frequency.

In S203, the terminal is charged based on the third direct-current electric signal.

In the embodiment, the method for wireless charging may be applied to the terminal. The terminal may include the at least one second radio frequency antenna, a second conversion circuit and a charging circuit. The second conversion circuit may be connected with the at least one second radio frequency antenna. In S201, the radio frequency signal for wireless charging may be received by the at least one second radio frequency antenna. The operation in S202 that the radio frequency signal is converted into the third direct-current electric signal of the third frequency may be specifically implemented by the second conversion circuit. The operation in S203 that the terminal is charged based on the third direct-current electric signal may be specifically implemented by the charging circuit.

Therefore, the method for wireless charging applied to the terminal may include:
receiving the radio frequency signal for wireless charging based on the at least one second radio frequency antenna;
converting the radio frequency signal into the third direct-current electric signal of the third frequency through the second conversion circuit; and
charging the terminal based on the third direct-current electric signal through the charging circuit.

The operation in S202 that the radio frequency signal is converted into the third direct-current electric signal of the third frequency may include that:
the radio frequency signal is converted into a fourth direct-current electric signal; and
smoothing processing is performed on the fourth direct-current electric signal to obtain the third direct-current electric signal of the third frequency.

The second conversion circuit in the terminal may include a second rectifier circuit and a second filter circuit. The operation that the radio frequency signal is converted into the fourth direct-current electric signal may be specifically implemented by the second rectifier circuit. The operation that smoothing processing is performed on the fourth direct-current electric signal to obtain the third direct-current electric signal of the third frequency may be specifically implemented by the second filter circuit.

Therefore, the operation in S202 that the radio frequency signal is converted into the third direct-current electric signal of the third frequency may include that:

the radio frequency signal is converted into the fourth direct-current electric signal based on the second rectifier circuit; and

smoothing processing is performed on the fourth direct-current electric signal to obtain the third direct-current electric signal of the third frequency based on the second filter circuit.

In the embodiment, the radio frequency signal may be received through the at least one second radio frequency antenna, and the high-frequency alternating current radio frequency signal may be further converted into the third low-frequency direct-current electric signal to charge the terminal based on the third direct-current electric signal. The radio frequency signal may be received at a position relatively far from a transmitter for wireless charging based on a characteristic that the radio frequency signal is high in frequency to implement radio frequency signal-based long-distance wireless charging, and convenience is brought to a user.

With respect to the method in the above embodiments, specific implementation modes of each step therein have been described in detail in the embodiments regarding the device, which will not be elaborated herein.

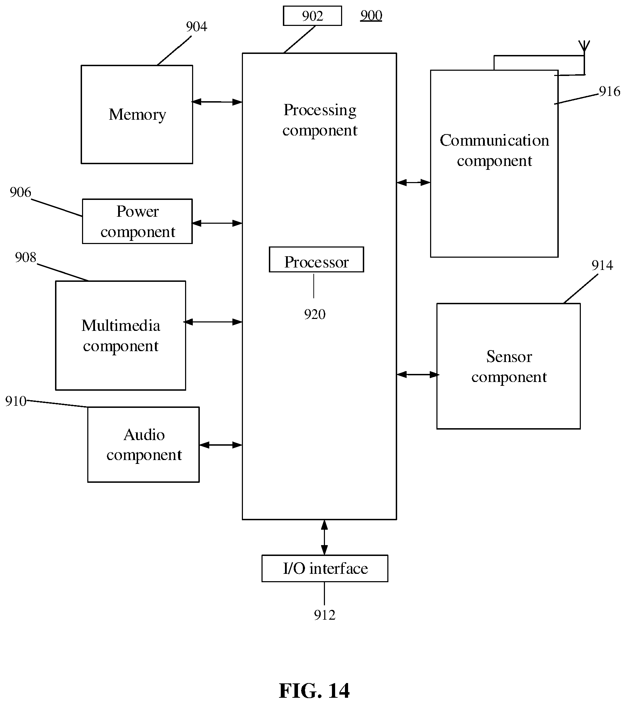

FIG. 14 is a block diagram of a device for wireless charging 900 according to an exemplary embodiment. For example, the device 900 may be a mobile phone, a computer, a digital broadcast terminal, a messaging device, a gaming console, a tablet, a medical device, exercise equipment, a personal digital assistant and the like.

Referring to FIG. 14, the device 900 may include one or more of the following components: a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the abovementioned method. Moreover, the processing component 902 may include one or more modules which facilitate interaction between the processing component 902 and the other components. For instance, the processing component 902 may include a multimedia module to facilitate interaction between the multimedia component 908 and the processing component 902. The memory 904 is configured to store various types of data to support the operation of the device 900. Examples of such data include instructions for any application programs or methods operated on the device 900, contact data, phonebook data, messages, pictures, video, etc. The memory 904 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 906 is configured to provide power for various components of the device 900. The power component 906 may include a power management system, one or more power supplies, and other components associated with generation, management and distribution of power for the device 900.

In some embodiments, the power component 906 may further include a transmitter for wireless charging, and the power component 906 supplies power to another device through the transmitter for wireless charging.

The multimedia component 908 may include a screen providing an output interface between the device 900 and a user. In some embodiments, the screen may include a Liquid Crystal Display (LCD) and a Touch Panel (TP). If the screen includes the TP, the screen may be implemented as a touch screen to receive an input signal from the user. The TP may include one or more touch sensors to sense touches, swipes and gestures on the TP. The touch sensors may not only sense a boundary of a touch or swipe action but also detect a duration and pressure associated with the touch or swipe action. In some embodiments, the multimedia component 908 may include a front camera and/or a rear camera. The front camera and/or the rear camera may receive external multimedia data when the device 900 is in an operation mode, such as a photographing mode or a video mode. Each of the front camera and the rear camera may be a fixed optical lens system or have focusing and optical zooming capabilities.

The audio component 910 is configured to output and/or input an audio signal. For example, the audio component 910 includes a Microphone (MIC), and the MIC is configured to receive an external audio signal when the device 900 is in the operation mode, such as a call mode, a recording mode and a voice recognition mode. The received audio signal may further be stored in the memory 904 or sent through the communication component 916. In some embodiments, the audio component 910 further includes a speaker configured to output the audio signal.

The I/O interface 912 may provide an interface between the processing component 902 and a peripheral interface module, and the peripheral interface module may be a keyboard, a click wheel, a button and the like. The button may include, but not limited to: a home button, a volume button, a starting button and a locking button.

The sensor component 914 may include one or more sensors configured to provide status assessment in various aspects for the device 900. For instance, the sensor component 914 may detect an on/off status of the device 900 and relative positioning of components, such as a display and small keyboard of the device 900, and the sensor component 914 may further detect a change in a position of the device 900 or a component of the device 900, presence or absence of contact between the user and the device 900, orientation or acceleration/deceleration of the device 900 and a change in temperature of the device 900. The sensor component 914 may include a proximity sensor configured to detect presence of an object nearby without any physical contact. The sensor component 914 may also include a light sensor, such as a Complementary Metal Oxide Semiconductor (CMOS) or Charge Coupled Device (CCD) image sensor, configured for use in an imaging application. In some embodiments, the sensor component 914 may also include an acceleration sensor, a gyroscope sensor, a magnetic sensor, a pressure sensor or a temperature sensor.

The communication component 916 is configured to facilitate wired or wireless communication between the device 900 and other equipment.

The device 900 may access a communication-standard-based wireless network, such as a Wireless Fidelity (WiFi) network, a 2nd-Generation (2G) or 3rd-Generation (3G) network or a combination thereof. In an exemplary embodiment, the communication component 916 may receive a broadcast signal or broadcast associated information from an external broadcast management system through a broadcast channel. In an exemplary embodiment, the communication component 916 may further include a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and another technology.

In an exemplary embodiment, the device 900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components.

In an exemplary embodiment, there is also provided a non-transitory computer-readable storage medium including instructions, such as the memory 904 including instructions, and the instructions may be executed by the processor 920 of the device 900 to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to a non-transitory computer-readable storage medium, instructions in the storage medium may be executed by a transmitter for wireless charging to enable the transmitter for wireless charging to execute a method for wireless charging, the method including:
receiving a first alternating-current electric signal of a first frequency;
converting the first alternating-current electric signal into a second alternating-current electric signal of a second frequency; and
based on at least one first radio frequency antenna on the transmitter for wireless charging, converting the second alternating-current electric signal into a radio frequency signal for wireless charging, and transmitting the radio frequency signal.

Or, the instruction in the storage medium may be executed by a terminal to enable the terminal to execute a method for wireless charging, the method further including:
receiving a radio frequency signal for wireless charging based on at least one second radio frequency antenna;
converting the radio frequency signal into a third direct-current electric signal of a third frequency; and
charging the terminal based on the third direct-current electric signal.

Other implementation solutions of the present disclosure will be apparent to those skilled in the art from consideration of the specification and practice of the present disclosure. This present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A transmitter for wireless charging (100), comprising:
an input circuit(101), configured to receive a first alternating-current electric signal of a first frequency;
a first conversion circuit(102), configured to convert the first alternating-current electric signal into a second alternating-current electric signal of a second frequency;
at least one first radio frequency antenna(103), connected with the first conversion circuit, and configured to convert the second alternating-current electric signal into a radio frequency signal for wireless charging and to transmit the radio frequency signal; and
a display screen(106), configured to display a charging parameter for wireless charging, the charging parameter comprising at least one of: the second frequency, a charging current, a charging voltage and charging power,
a carrier(501), the display screen and the at least one first radio frequency antenna being placed on an outer surface of the carrier;
a base(502), provided with an accommodation cavity, the input circuit and the first conversion circuit being arranged in the accommodation cavity; and
**characterized in that**, the transmitter further comprises:
a support rod(503), one end of the support rod being connected with the base and the other end being connected with the carrier, to support the carrier.

2. The transmitter for wireless charging of claim 1, wherein the first conversion circuit comprises:
a first rectifier circuit(1021), configured to convert the first alternating-current electric signal into a first direct-current electric signal;
a first filter circuit(1022), configured to perform smoothing processing on the first direct-current electric signal to obtain a second direct-current electric signal; and
an inverter circuit(1023), configured to perform frequency modulation on the second direct-current electric signal to convert the second direct-current electric signal into the second alternating-current electric signal of the second frequency.

3. The transmitter for wireless charging of claim 1, further comprising:
a detection circuit(104), configured to detect whether there is a living body entering a preset range of the transmitter for wireless charging or not and to form a detection signal; and
a control circuit(105), connected with the detection circuit and configured to, when the detection signal indicates that there is a living body entering the preset range, reduce transmission power of the radio frequency signal.

4. The transmitter for wireless charging of any one of claims 1 to 3, wherein
the carrier (501) is umbrella-shaped, and the at least one first radio frequency antenna is arranged at a top end of the umbrella-shaped carrier.

5. The transmitter for wireless charging of claim 4, further comprising:
a light emitting component, arranged in the carrier of the umbrella shape and configured to emit light.

6. A method for wireless charging, implemented by a transmitter for wireless charging, the method comprising:
receiving (S 101) a first alternating-current electric signal of a first frequency;
converting (S 102) the first alternating-current electric signal into a second alternating-current electric signal of a second frequency;
based on (S103) at least one first radio frequency antenna on the transmitter for wireless charging, converting the second alternating-current electric signal into a radio frequency signal for wireless charging, and transmitting the radio frequency signal; and
displaying a charging parameter for wireless charging through a display screen on the transmitter for wireless charging, the charging parameter comprising at least one of the second frequency, a charging current, a charging voltage, and charging power,
placing the display screen and the at least one first radio frequency antenna on an outer surface of a carrier of the transmitter;
arranging the input circuit and the first conversion circuit in an accommodation cavity of a base of the transmitter; and
**characterized in that**, the method further comprises:
connecting one end of a support rod of the transmitter with the base and connecting the other end of the support rod with the carrier to support the carrier.

7. The method of claim 6, wherein converting the first alternating-current electric signal into the second alternating-current electric signal of the second frequency comprises:
converting the first alternating-current electric signal into a first direct-current electric signal;
performing smoothing processing on the first direct-current electric signal to obtain a second direct-current electric signal; and
performing frequency modulation on the second direct-current electric signal to convert the second direct-current electric signal into the second alternating-current electric signal of the second frequency.

8. The method of claim 6, further comprising:
detecting whether there is a living body entering a preset range of the transmitter for wireless charging or not, and forming a detection signal; and
when the detection signal indicates that there is a living body entering the preset range, reducing transmission power of the radio frequency signal.

9. The method of claim 6, wherein the carrier is umbrella-shaped, and the at least one first radio frequency antenna is arranged at a top end of the umbrella-shaped carrier.

10. The method of claim 9, further comprising:
arranging a light emitting component in the carrier of the umbrella shape to emit light.

## Patentansprüche

1. Sender zum drahtlosen Laden (100), umfassend:
eine Eingangsschaltung (101), die so konfiguriert ist, dass sie ein erstes elektrisches Wechselstromsignal mit einer ersten Frequenz empfängt;
eine erste Umwandlungsschaltung (102), die so konfiguriert ist, dass sie das erste elektrische Wechselstromsignal in ein zweites elektrisches Wechselstromsignal mit einer zweiten Frequenz umwandelt;
mindestens eine erste Hochfrequenzantenne (103), die mit der ersten Umwandlungsschaltung verbunden und so konfiguriert ist, dass sie das zweite elektrische Wechselstromsignal in ein Hochfrequenzsignal zum drahtlosen Laden umwandelt und das Hochfrequenzsignal überträgt; und
einen Anzeigebildschirm (106), der so konfiguriert ist, dass er einen Ladeparameter für das drahtlose Laden anzeigt, wobei der Ladeparameter mindestens eines umfasst von: der zweiten Frequenz, einem Ladestrom, einer Ladespannung und einer Ladeleistung,
einen Träger (501), wobei der Anzeigebildschirm und die mindestens eine erste Hochfrequenzantenne auf einer Außenfläche des Trägers platziert sind;
eine Basis (502), die mit einem Aufnahmehohlraum versehen ist, wobei die Eingangsschaltung und die erste Umwandlungsschaltung in dem Aufnahmehohlraum angeordnet sind; und
**dadurch gekennzeichnet, dass** der Sender weiter umfasst:
eine Stützstange (503), wobei ein Ende der Stützstange mit der Basis und das andere Ende mit dem Träger verbunden ist, um den Träger zu stützen.

2. Sender zum drahtlosen Laden nach Anspruch 1, wobei die erste Umwandlungsschaltung umfasst:
eine erste Gleichrichterschaltung (1021), die so konfiguriert ist, dass sie das erste elektrische Wechselstromsignal in ein erstes elektrisches Gleichstromsignal umwandelt;
eine erste Filterschaltung (1022), die so konfiguriert ist, dass sie eine Glättungsverarbeitung an dem ersten elektrischen Gleichstromsignal durchführt, um ein zweites elektrisches Gleichstromsignal zu erhalten; und
eine Wechselrichterschaltung (1023), die so konfiguriert ist, dass sie eine Frequenzmodulation an dem zweiten elektrischen Gleichstromsignal durchführt, um das zweite elektrische Gleichstromsignal in das zweite elektrische Wechselstromsignal mit der zweiten Frequenz umzuwandeln.

3. Sender zum drahtlosen Laden nach Anspruch 1, weiter umfassend:
eine Erkennungsschaltung (104), die so konfiguriert ist, dass sie erkennt, ob ein lebender Körper in einer voreingestellte Reichweite des Senders zum drahtlosen Laden eintritt oder nicht, und ein Erkennungssignal bildet; und
eine Steuerschaltung (105), die mit der Erkennungsschaltung verbunden und so konfiguriert ist, dass sie, wenn das Erkennungssignal angibt, dass ein lebender Körper in die voreingestellte Reichweite eintritt, die Sendeleistung des Hochfrequenzsignals reduziert.

4. Sender zum drahtlosen Laden nach einem der Ansprüche 1 bis 3, wobei
der Träger (501) schirmförmig ist, und die mindestens eine erste Hochfrequenzantenne an einem oberen Ende des schirmförmigen Trägers angeordnet ist.

5. Sender zum drahtlosen Laden nach Anspruch 4, weiter umfassend:
eine lichtemittierende Komponente, die in dem Träger der Schirmform angeordnet und so konfiguriert ist, dass sie Licht emittiert.

6. Verfahren zum drahtlosen Laden, das von einem Sender zum drahtlosen Laden durchgeführt wird, wobei das Verfahren umfasst:
Empfangen (S101) eines ersten elektrischen Wechselstromsignals mit einer ersten Frequenz;
Umwandeln (S102) des ersten elektrischen Wechselstromsignals in ein zweites elektrisches Wechselstromsignal mit einer zweiten Frequenz;
basierend auf (S103) mindestens einer ersten Hochfrequenzantenne an dem Sender zum drahtlosen Laden, Umwandeln des zweiten elektrischen Wechselstromsignals in ein Hochfrequenzsignal zum drahtlosen Laden und Übertragen des Hochfrequenzsignals; und
Anzeigen eines Ladeparameters für das drahtlose Laden über einen Anzeigebildschirm am Sender zum drahtlosen Laden, wobei der Ladeparameter mindestens eines umfasst von der zweiten Frequenz, einem Ladestrom, einer Ladespannung und einer Ladeleistung,
Platzieren des Anzeigebildschirms und der mindestens einen ersten Hochfrequenzantenne auf einer Außenfläche eines Trägers des Senders;
Anordnen der Eingangsschaltung und der ersten Umwandlungsschaltung in einem Aufnahmehohlraum einer Basis des Senders; und
**dadurch gekennzeichnet, dass** das Verfahren weiter umfasst:
Verbinden eines Endes einer Stützstange des Senders mit der Basis und Verbinden des anderen Endes der Stützstange mit dem Träger, um den Träger zu stützen.

7. Verfahren nach Anspruch 6, wobei das Umwandeln des ersten elektrischen Wechselstromsignals in ein zweites elektrisches Wechselstromsignal mit einer zweiten Frequenz umfasst:
Umwandeln des ersten elektrischen Wechselstromsignals in ein erstes elektrisches Gleichstromsignal;
Durchführen einer Glättungsverarbeitung an dem ersten elektrischen Gleichstromsignal, um ein zweites elektrisches Gleichstromsignal zu erhalten; und
Durchführen einer Frequenzmodulation an dem zweiten elektrischen Gleichstromsignals, um das zweite elektrische Gleichstromsignal in das zweite elektrische Wechselstromsignal mit der zweiten Frequenz umzuwandeln.

8. Verfahren nach Anspruch 6, weiter umfassend:
Erkennen, ob ein lebender Körper in eine voreingestellte Reichweite des Senders zum drahtlosen Laden eintritt oder nicht, und Bilden eines Erkennungssignals; und
wenn das Erkennungssignal angibt, dass ein lebender Körper in die voreingestellte Reichweite eindringt, Reduzieren der Sendeleistung des Hochfrequenzsignals.

9. Verfahren nach Anspruch 6, wobei der Träger schirmförmig ist und die mindestens eine erste Hochfrequenzantenne an einem oberen Ende des schirmförmigen Trägers angeordnet ist.

10. Verfahren nach Anspruch 9, weiter umfassend:
Anordnen einer lichtemittierenden Komponente im Träger der Schirmform, um Licht zu emittieren.

## Revendications

1. Émetteur de chargement sans fil (100), comprenant :
un circuit d'entrée (101) configuré pour recevoir un premier signal électrique de courant alternatif ayant une première fréquence ;
un premier circuit de conversion (102), configuré pour convertir le premier signal électrique de courant alternatif en un second signal électrique de courant alternatif ayant une seconde fréquence ;
au moins une première antenne radiofréquence (103), connectée au premier circuit de conversion, et configurée pour convertir le second signal électrique de courant alternatif en un signal radiofréquence de chargement sans fil et pour transmettre le signal radiofréquence ; et
un écran d'affichage (106) configuré pour afficher un paramètre de charge pour le chargement sans fil, le paramètre de charge comprenant au moins un parmi : la seconde fréquence, un courant de charge, une tension de charge et une puissance de charge,
un support (501), l'écran d'affichage et la au moins une première antenne radiofréquence étant placés sur une surface externe du support ;
une base (502), pourvue d'une cavité de logement, le circuit d'entrée et le premier circuit de conversion étant agencés dans la cavité de logement ; et
**caractérisé en ce que** l'émetteur comprend en outre :
une tige de maintien (503), une extrémité de la tige de maintien étant reliée à la base et l'autre extrémité étant reliée au support.

2. Émetteur de chargement sans fil selon la revendication 1, dans lequel le premier circuit de conversion comprend :
un premier circuit redresseur (1021), configuré pour convertir le premier signal électrique de courant alternatif en un premier signal électrique de courant continu ;
un premier circuit de filtrage (1022), configuré pour réaliser un traitement de lissage sur le premier signal électrique de courant continu pour obtenir un second signal électrique de courant continu ; et
un circuit inverseur (1023), configuré pour réaliser une modulation de fréquence sur le second signal électrique de courant continu pour convertir le second signal électrique de courant continu en le second signal électrique de courant alternatif ayant la seconde fréquence.

3. Émetteur de chargement sans fil selon la revendication 1, comprenant en outre :
un circuit de détection (104), configuré pour détecter si un corps vivant pénètre ou pas dans une plage prédéfinie de l'émetteur de chargement sans fil et pour former un signal de détection ; et
un circuit de commande (105) connecté au circuit de détection et configuré, lorsque le signal de détection indique qu'un corps vivant pénètre dans la plage prédéfinie, pour réduire une puissance d'émission du signal radiofréquence.

4. Émetteur de chargement sans fil selon l'une quelconque des revendications 1 à 3, dans lequel
le support (501) est en forme de parapluie, et la au moins une antenne radiofréquence est agencée au niveau d'une extrémité supérieure du support en forme de parapluie.

5. Émetteur de chargement sans fil selon la revendication 4, comprenant en outre :
un composant électroluminescent, agencé dans le support en forme de parapluie et configuré pour émettre de la lumière.

6. Procédé de chargement sans fil, mis en œuvre par un émetteur de chargement sans fil, le procédé comprenant :
la réception (S101) d'un premier signal électrique de courant alternatif ayant une première fréquence ;
la conversion (S102) du premier signal électrique de courant alternatif en un second signal électrique de courant alternatif ayant une seconde fréquence ;
sur la base (S103) d'au moins une première antenne radiofréquence sur l'émetteur de chargement sans fil, la conversion du second signal électrique de courant alternatif en un signal radiofréquence de chargement sans fil et la transmission du signal radiofréquence ; et
l'affichage d'un paramètre de charge pour le chargement sans fil par le biais d'un écran d'affichage sur l'émetteur de chargement sans fil, le paramètre de charge comprenant au moins une de la seconde fréquence, d'un courant de charge, d'une tension de charge et d'une puissance de charge,
le placement de l'écran d'affichage et de la au moins une première antenne radiofréquence sur une surface externe d'un support de l'émetteur ;
l'agencement du circuit d'entrée et du premier circuit de conversion dans une cavité de logement d'une base de l'émetteur ; et
**caractérisé en ce que** le procédé comprend en outre :
la liaison d'une extrémité d'une tige de maintien de l'émetteur avec la base et la liaison de l'autre extrémité de la tige de maintien avec le support pour maintenir le support.

7. Procédé selon la revendication 6, dans lequel la conversion du premier signal électrique de courant alternatif en le second signal électrique de courant alternatif de la seconde fréquence comprend :
la conversion du premier signal électrique de courant alternatif en un premier signal électrique de courant continu ;
la réalisation d'un traitement de lissage sur le premier signal électrique de courant continu pour obtenir un second signal électrique de courant continu ; et
la réalisation d'une modulation de fréquence sur le second signal électrique de courant continu pour convertir le second signal électrique de courant continu en le second signal électrique de courant alternatif de la seconde fréquence.

8. Procédé selon la revendication 6, comprenant en outre :
le fait de détecter si un corps vivant pénètre ou pas dans une plage prédéfinie de l'émetteur de chargement sans fil et la formation d'un signal de détection ; et
lorsque le signal de détection indique qu'un corps vivant pénètre dans la plage prédéfinie, la réduction d'une puissance de transmission du signal radiofréquence.

9. Procédé selon la revendication 6, dans lequel le support est en forme de parapluie, et la au moins une antenne radiofréquence est agencée au niveau d'une extrémité supérieure du support en forme de parapluie.

10. Procédé selon la revendication 9, comprenant en outre :
l'agencement d'un composant électroluminescent dans le support en forme de parapluie pour émettre de la lumière.
